# EUROPEAN PATENT SPECIFICATION

(11) **EP 1 170 163 B1**
(45) Date of publication and mention of the grant of the patent: **23.03.2005**
(21) Application number: 01116351.6
(22) Date of filing: 05.07.2001
(51) Int. Cl.: B60K 15/04

(54) **Fuel cap device**
Verschlussdeckel für Kraftstoffbehälter
Bouchon de réservoir de carburant

(30) Priority: 06.07.2000 JP 2000204569
(43) Date of publication of application: 09.01.2002
(73) Proprietor: Toyoda Gosei Co., Ltd., Nishikasugai-gun, Aichi-ken 452-8564 (JP)
(72) Inventor: Hagano, Hiroyuki c/o Toyoda Gosei Co.,Ltd., Nishikasugai-gun, Aichi-ken 452-8564 (JP); Nakagawa, Masayuki c/o Toyoda Gosei Co.,Ltd., Nishikasugai-gun, Aichi-ken 452-8564 (JP)
(74) Representative: Kramer - Barske - Schmidtchen

(56) References cited:
- EP-A- 1 040 952
- WO-A-00/20292
- US-A- 5 449 086
- US-A- 5 462 190

## Description

### BACKGROUND OF THE INVENTION

### 1. Field of the Invention

This invention relates to a fuel cap device furnished with a fuel cap for opening and closing a pouring inlet of a fuel tank in an automobile. The present invention is based on Japanese Application No. 2000-204569.

### 2. Description of the Related Art

Conventionally, as this kind of fuel cap device, such a structure is known that a fuel cap having a gasket is rotated two or three times into or out of a filler neck connected to the fuel tank to open or close the pouring inlet. Since the operations of plural times of the fuel cap probably bring about an incompletely tightened condition, it is known for settling such occasions that an only rotation at a predetermined angle, e.g., 90° causes the fuel cap to close the pouring inlet of the filler neck.

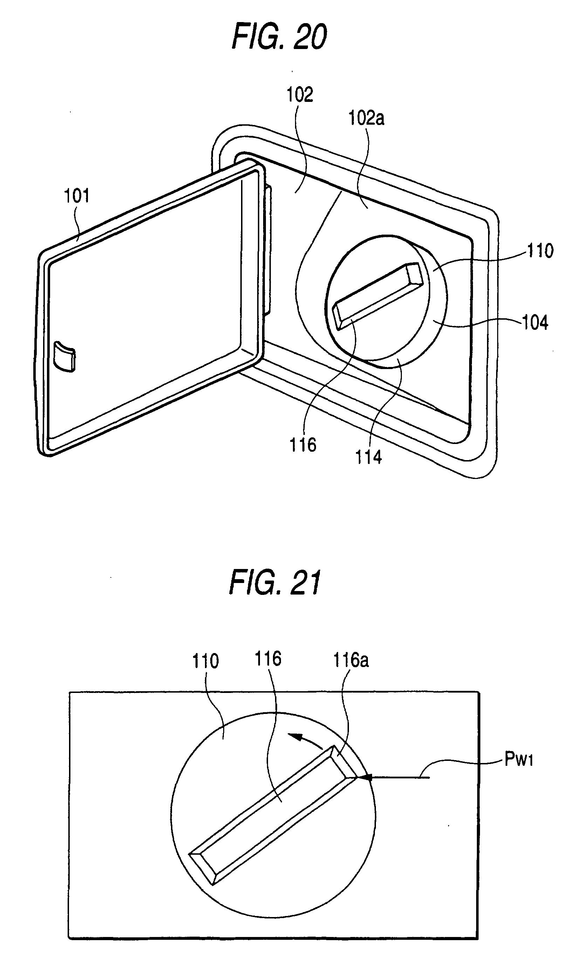

Fig. 20 is an explanatory view showing a neighborhood of the pouring inlet disposed at the rear part of an automobile. In the same, there is provided a recess part 102 to be opened and closed by an oil cover 101 at the rear part of a car body panel, and a pouring inlet 104 for a filler pipe is located in a bottom wall 102a thereof, and is sealed with a fuel cap 110. The fuel cap 110 has a casing (not shown) closing the pouring inlet 104 and a cover 114 attached to the casing. The cover 114 projects outward an operating portion 116. For closing the pouring inlet 104 with the fuel cap 110, the operating portion 116 is grasped with fingers of an operator to put the casing into the pouring inlet 104 and rotate the operating portion 116 about 90° in a clockwise direction, in short, till the position shown in Fig. 20.

The conventional fuel cap 110 has an outside edge 116a of the operating portion 116 directing rearwards of the automobile as shown in Fig. 21 when closing the pouring inlet 104. There has been involved with a problem about the prior art that, in case receiving a large external force Pw1 from the rearward as being rear-ended, the operating portion 116 rotates counterclockwise direction to easily loosen the fuel cap 110.

US 5,462,190 refers to a fuel cap device comprising a closer having an operating portion. In a closed position the operating portion is turned such that an external force exerted from the rear of the vehicle and received at the operating portion's outer peripheral edge situated in a rearmost part of the vehicle intends to further close the closer.

US 5,449,086, which forms the preamble of claim 1, discloses a fuel cap device comprising a closer for closing an inlet connected to a fuel tank. The closer includes a cover portion on which an operating portion is formed, a closer main body for closing the inlet and a torque mechanism for connecting the cover and the closer main body. If the roational movement of the cover portion, the torque transmission ring and the main body is continued until the main body is fully engaged in the filler neck, a further rotation of the cover in the same direction results in the torque transmission ring rotating with respect to the cover due to a torque overriding connection between the annular torque transmission ring and the main body. This is to prevent overtightening of the main body.

The invention is to solve the technical problem of the prior art, and it is accordingly an object of the invention to provide a fuel cap device having a fuel cap enabling to open and close at small operating angles and being difficult to loosen by an unexpected external force.

### SUMMARY OF THE INVENTION

This object is solved by a fuel device comprising the features of claim 1. Preferred embodiments are defined by the dependent claims.

In the fuel cap device according to the invention, for causing the fuel cap to close the pouring inlet, grasping the operating portion of the fuel cap with the fingers to insert the closer thereof into the pouring inlet, the operating portion is rotated in the closing direction, so that the closer is rotated together with the operating portion to seal between the pouring inlet and the closer via the sealing means. The operating angle closing the fuel cap is as small as 180° or less and good in operation.

The outer circumferential edge of the operating portion is determined to be at the closing position such that the moment is transmitted in the closing direction from the operating portion to the closer, in case receiving an external force going from the rear side to the front side of the automobile when the fuel cap is closed. Accordingly, the outer circumferential edge of the operating portion receives the external force going from the rear side to the front side of the automobile, the fuel cap rotates in the closing direction, so that it is not loosened. Thus, even if the fuel cap receives the external force as being rear-ended, it can maintain the sealing function.

### BRIEF DESCRIPTION OF THE DRAWINGS

Fig. 1 is a perspective view showing the rear part of an automobile;
Fig. 2 is a perspective view enlarging the neighborhood of the oil hole of Fig. 1;
Fig. 3 is a perspective view showing a state of taking off the fuel cap from the state of Fig. 2;
Fig. 4 is an explanatory view of the opening and closing of the fuel cap;
Fig. 5 is an explanatory view of the closing state of the fuel cap;
Fig. 6 is a side view, partially in section, of the fuel cap;
Fig. 7 is an explanatory view of the relationship between the casing side retaining portion of the casing main body and the filler neck;
Fig. 8 is an exploded perspective view showing peripheral parts of the torque mechanism;
Fig. 9 is a cross sectional view showing the neighborhood of the torque mechanism;
Fig. 10 is an explanatory view of the operation of the torque mechanism together with opening and closing of the fuel cap;
Fig. 11 is an explanatory view of the operation continuing from Fig. 10;
Fig. 12 is an explanatory view of the operation continuing from Fig. 11;
Fig. 13 is an explanatory view of the operation continuing from Fig. 12;
Fig. 14 is an explanatory view of the operation continuing from Fig. 13;
Fig. 15 is an explanatory view of the operation continuing from Fig. 14;
Fig. 16 is an explanatory view of the operation continuing from Fig. 15;
Fig. 17 is an explanatory view of the operation continuing from Fig. 16;
Fig. 18 is an explanatory view of the operation continuing from Fig. 17;
Fig. 19 is an explanatory view of the positional relation of closing the fuel cap concerned with the other embodiment;
Fig. 20 is an explanatory view showing a neighborhood of the pouring inlet disposed at the rear part of an existing automobile; and
Fig. 21 is an explanatory view of the closing position of the existing fuel cap.

### DETAILED DESCRIPTION OF THE PREFERRED EMBODIMENT

For more clarifying the above mentioned structure and works of the invention, reference will be made to preferred embodiments of the invention as follows.

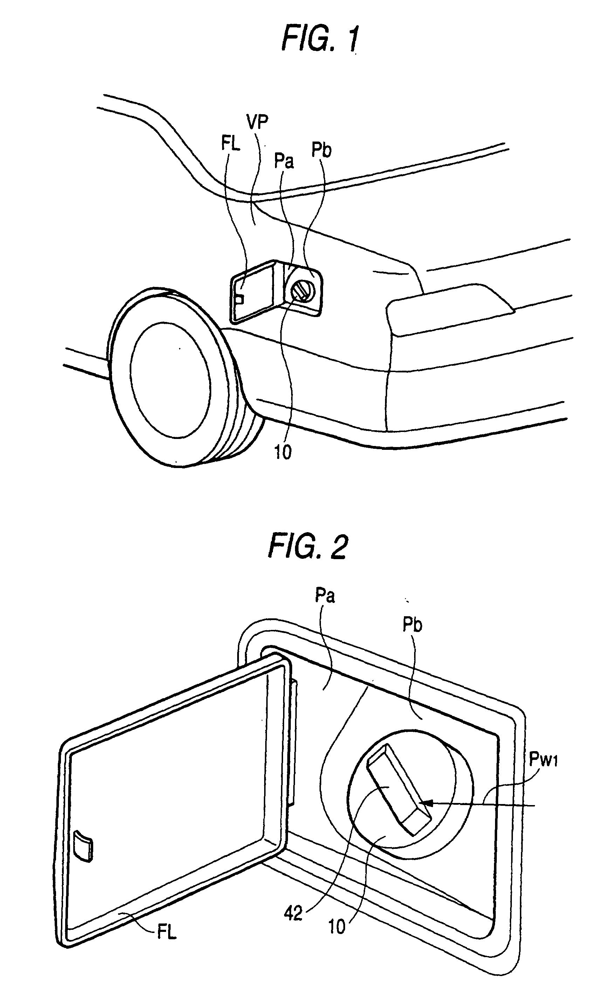

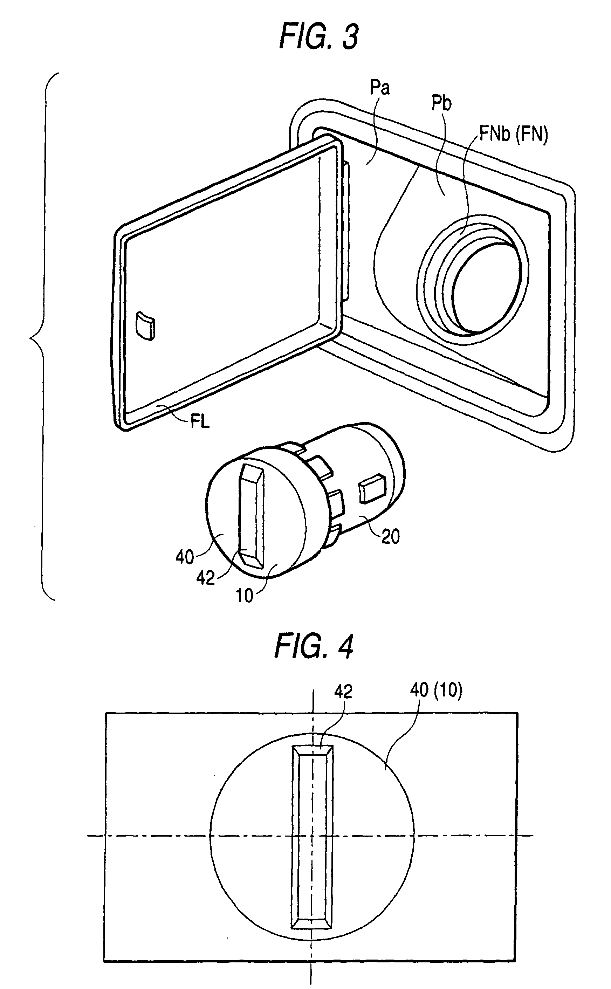

Fig. 1 is a perspective view showing the rear part of the automobile. Figs. 2 and 3 are views enlarging the neighborhood of the oil hole of Fig. 1. Fig. 2 shows a state of attaching the fuel cap, and Fig. 3 shows a state of taking off the fuel cap, respectively. In Figs. 1 to 3, at the rear part of a car body panel VP, a recess Pa is provided which opens and closes by an oil cover FL, while in a bottom wall Pb of the recess, a pouring inlet FNb (Fig. 3) of a filler neck FN is disposed. The pouring inlet FNb is sealed by the fuel cap 10. As shown in Fig. 3, the fuel cap 10 comprises a casing main body 20 (closer) closing the pouring inlet FNb, a cover 40 affixed to the casing main body 20, and a gasket (not shown) as a sealing means . The cover 40 projects the operating portion 42 for rotating the fuel cap 10 by grasping with the fingers of the operator. The operating portion 42 forms the projection passing the center of the casing main body 20 and bridging in the radius direction.

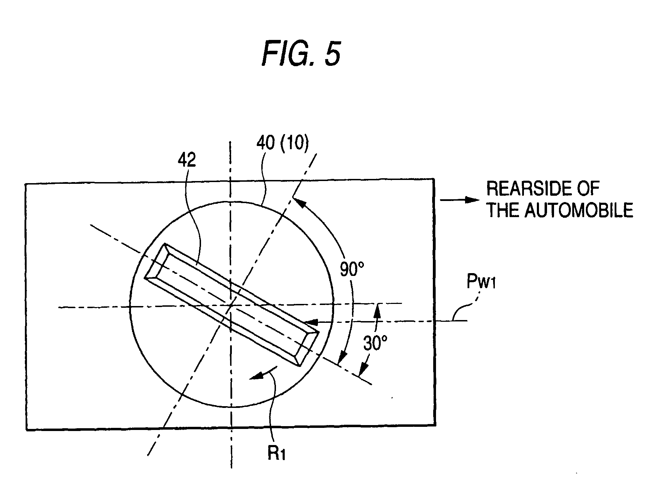

Figs. 4 and 5 are views explaining positional relations of the operating portion 42 when the fuel cap 10 opens and closes . A state that the operating portion 42 of the fuel cap 10 shown in Fig. 4 stands in a vertical direction is a position for inserting and removing the fuel cap 10, and as shown in Fig. 5 from Fig. 4, a position that the operating portion 42 rotates clockwise 120° is a closing position. At the closing position of the fuel cap 10, the automobile starts.

For closing the pouring inlet FNb with the fuel cap 10 from the state shown in Fig. 3, the operating portion 42 is grasped by the fingers to insert the casing main body 20 into the pouring inlet FNb. At this time, the longitudinal direction of the operating portion 42 is set vertical as shown in Fig. 4 to insert the casing main body 20 into the pouring inlet FNb. Subsequently, if the operating portion 42 rotates clockwise about 120°, the casing main body 20 rotates till the position of Fig. 5 together with the operating portion 42. The fuel cap 10 closes thereby the pouring inlet FNb under a condition that the gasket seals between the casing main body 20 and filler neck FN.

In the above practicing mode, the angle closing the fuel cap 10 is small as 120° or less, and the closing rotation does not require repetitions of several times and the operability is excellent.

Further, as shown in Fig. 5, the outer circumferential edge of the operating portion 42 is determined to be at the closing position of the fuel cap 10 such that the moment is transmitted in the closing direction from the operating portion 42 to the casing main body 20 in the closing direction (R1) in case receiving an external force Pw1 going from the rear side to the front side of the automobile when the fuel cap 10 is closed. Accordingly, the outer circumferential edge of the operating portion 42 receives the external force going from the rear side to the front side of the automobile, the fuel cap 10 rotates in the closing direction, so that it does not loosen. Thus, even if the fuel cap 10 receives the external force as being rear-ended, it can maintain the sealing function.

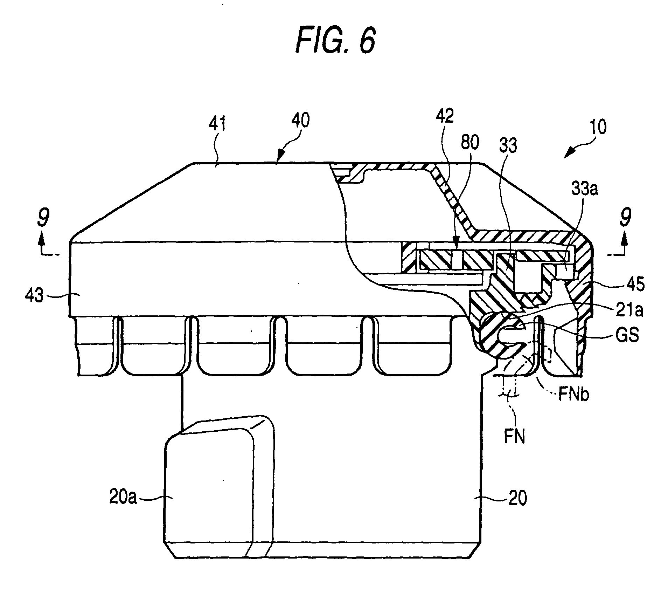

Next, explanation will be made to a specific structure of the fuel cap 10, referring to Figs. 6 to 18. Fig. 6 is a side view, partially in section, of the fuel cap 10. The fuel cap 10 is mounted on the filler neck FN having the pouring inlet FNb supplying the fuel into a fuel tank (not shown), and comprises the casing main body 20 formed with a synthetic resin such as polyacetal, the cover 40 mounted on the casing main body 20 and formed with a synthetic resin such as nylon, a torque mechanism 80, and the gasket GS sealing between the casing main body 20 and the filer neck FN.

The gasket GS is furnished outside under a flange part 33 at the upper part of the casing main body 20. The gasket GS interposes between a seal holder 21a of the flange part 33 and the pouring inlet FNb of the filler neck FN, and serves as a sealing by being pushed toward the seal holder 21a when the fuel cap 10 is inlaid in the pouring inlet FNb.

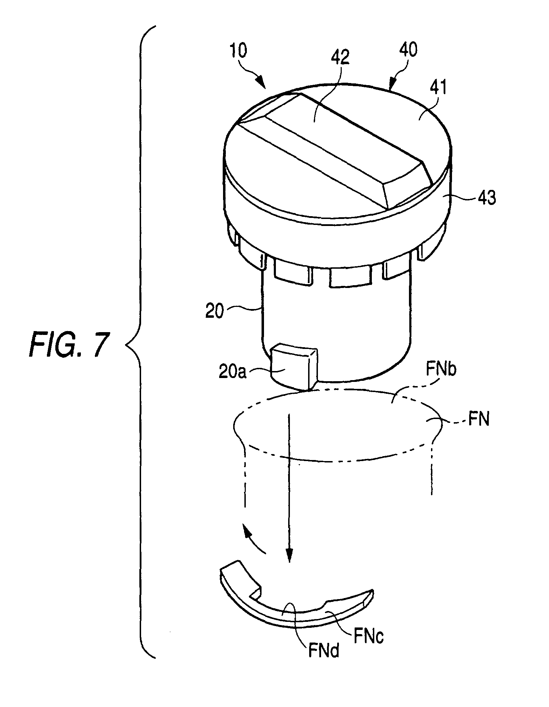

The casing main body 20 is formed at the lower part of outer periphery with a casing side retaining portion 20a. Fig. 7 is a view explaining the relationship between a casing side retaining portion 20a of the casing main body 20 and the filler neck FN. As shown in Fig. 7, an opening side retaining portion FNc is formed on the inner periphery of the filler neck FN. In a part of the inner periphery of the opening side retaining portion FNc, a neck side inserting notch FNd is defined which enables the casing side retaining portion 20a of the fuel cap 10 to insert in an axial direction of the casing main body 20. Therefore, the casing side retaining portion 20a is aligned with the neck side inserting notch FNd, and if the fuel cap 10 is rotated at a predetermined angle (around 120°) under the condition where the fuel cap 10 is inserted into the filler neck FN, the casing side retaining portion 20a is engaged with the opening side retaining portion FNc, whereby the fuel cap 10 is attached to the filler neck FN.

Turning back to Fig. 6, the cover 40 is mounted rotatably and detachably on the flange part 33 at the upper part of the casing main body 20. That is, the cover 40 shown in Fig. 6 comprises a bottom wall 41, the operating portion 42 projecting to the outer wall of the bottom wall 41, and a side wall 43 formed in the outer circumference of the bottom wall 41. In the inside of the side wall 43, retaining projections 45 are provided at eight parts equidistantly following the circumference. If the retaining projections 45 engage an outer ring-shaped portion 33a of the flange part 33, the cover 40 is set to the casing main body 20.

Between the casing main boy 20 and the cover 40, a torque mechanism 80 is provided. The torque mechanism 80 gives moderation to the cover 40 if it receives more than predetermined rotation torque when the fuel cap 10 closes the pouring inlet FNb so as to confirm that the fuel cap 10 is mounted on the filler neck FN at a desired rotation torque.

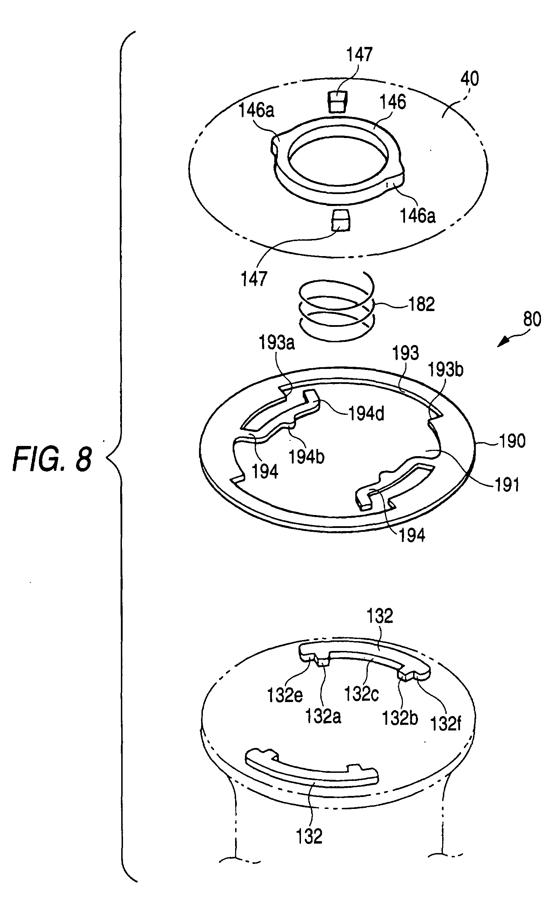

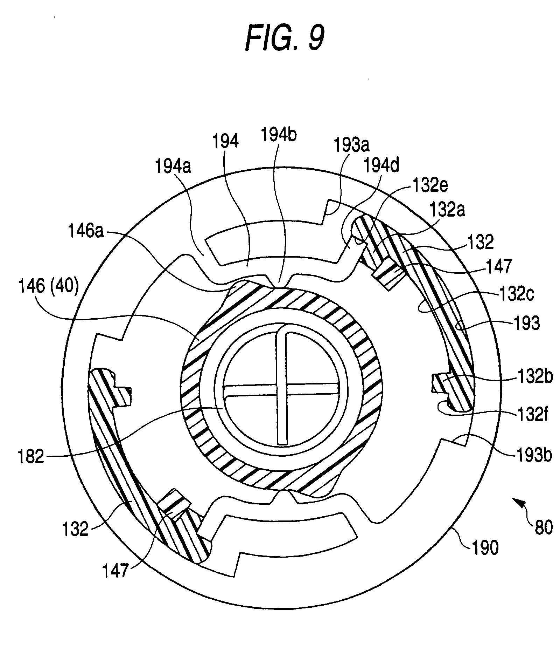

Fig. 8 is dismantled perspective views showing peripheral parts of the torque mechanism 80. Fig. 9 is a cross sectional view showing the neighborhood of the torque mechanism 80. The torque mechanism 80 has elastic pieces 194 and others of the same shape around a rotary shaft of the cover 40 and the same working effects, and so explanation will be mainly made to members of a shown upper side.

As seen in Figs. 8 and 9, the torque mechanism 80 is equipped with main body side ribs 132 standing on an upper and outer circumference of the casing main body 20, a tubular axial part 146 of the cover 40, cover side retaining parts 146a, cover side trigger projections 147, a spring 182, and a torque plate 190. In short, the tubular axial part 146 stands at an inside center of the cover 40, and the outer circumference of the tubular axial part 146 projects the cover side retaining parts 146a as mountains in cross section. For the inside circumference of the main body side rib 132, the cover side trigger projections 147 project in arc.

The spring 182 is a torsion spring which intervenes between the casing main body 20 and the cover 40, and is received within the tubular axial part 146, passing through the torque plate 190 so as to be thus present between the casing main body 20 and the cover 40 for storing a urging force when the cover 40 rotates clockwise.

The torque plate 190 is a thin disk formed of a resin having penetrating holes and guide parts around the rotary shaft of the cover 40. That is, the center of the torque plate 190 is defined with a center hole 191 for passing the tubular axial part 146 of the cover 40 and formed with the elastic torque pieces 194 on a peripheral edge portion of the center hole 191. The elastic torque piece 194 has a fulcrum at a one-sided or cantilevered supporting edge 194a shaped in arc, projects the plate side retaining part 194b toward the inside circumference, and has a leg part 194d formed at a free end side.

The torque plate 190 is defined with arc shaped rib guiding parts 193 for slidably disposing the main body side ribs 132 which reciprocate between pressing edges 193a and 193b being both edges of the rib guiding parts 193. The main body side rib 132 is an arc shaped member following the rib guiding part 193, and has retaining projections 132a, 132b in the inside circumference. At the inside circumference of the main body side rib 132 and between the retaining projections 132a and 132b, guide parts 132c are formed for slidably supporting the cover side trigger projections 147. At the right side of the retaining projection 132a of the drawing and at the left side of the retaining projection 132b of the same, supporting edges 132e, 132f are formed respectively, the supporting edge 132e being for supporting the legs 194d of the elastic torque pieces 194.

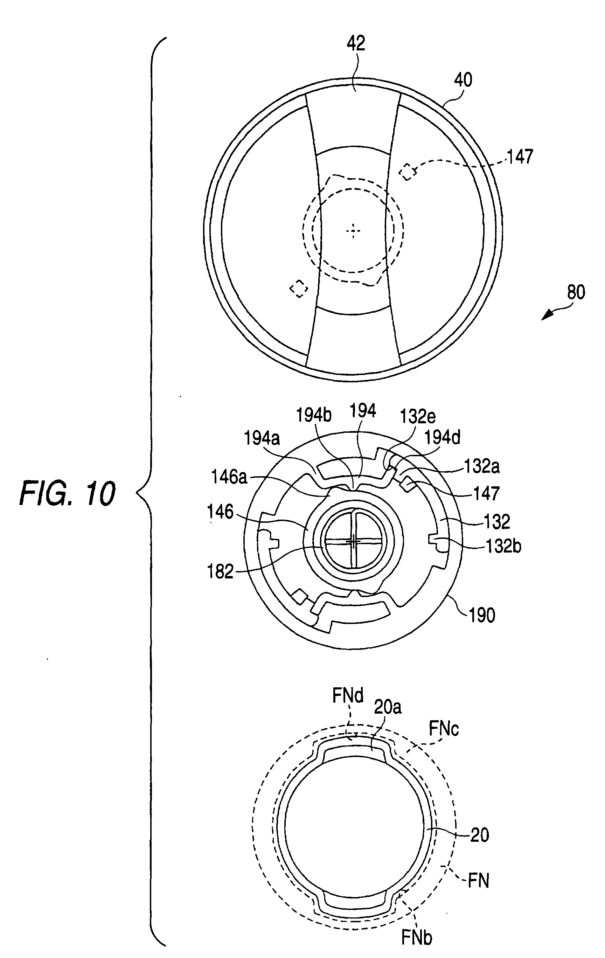

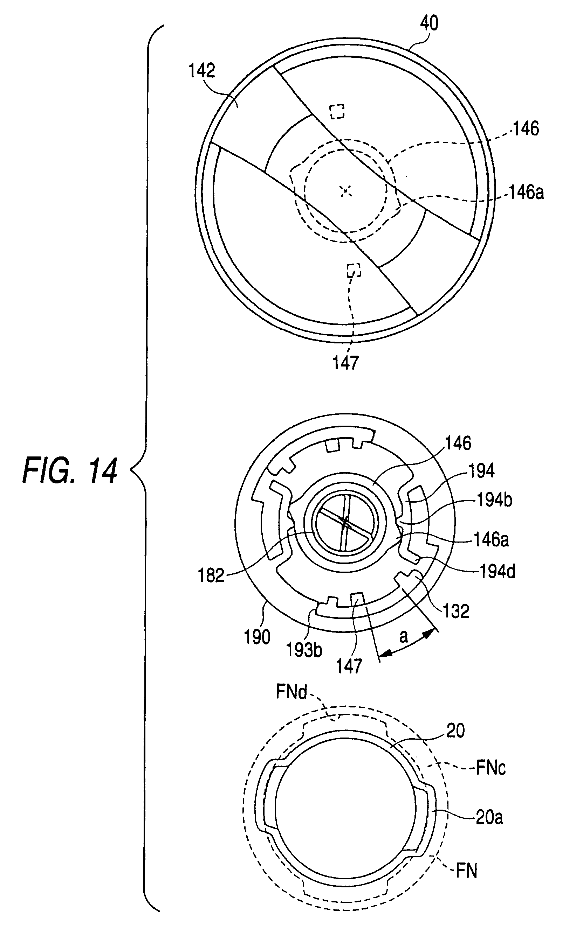

Operation of the torque mechanism 80 will be referred to. Figs. 10 to 18 are views explaining operations of the torque mechanism 80 together with opening and closing of the fuel cap 10. Figs. 10 to 14 show operations until closing of the fuel cap 10, and Figs. 14 to 18 show operations until opening of the same. In them, the upper side figures show the positional relations of the cover 40, the central figures show the positional relations of the torque plate 190 being main, and the lower side figures show the positional relations between the casing side retaining part 20a of the casing main body 20 and the neck side inserting notch FNd.

As shown in Fig. 10, while the pouring inlet FNd opens, the operating portion 42 of the cover 40 is held by the thumb and the forefinger so as to align the casing side retaining part 20a of the casing main body 20 to the neck side inserting notch FNd of the filler neck FN and insert the axial direction. Then, if the operating portion 42 of the cover 40 is vertically directed, the casing side retaining part 20a and the neck side inserting notch FNd are brought to a position enabling to insert, thereby to provide a positional relation easy to attach the fuel cap 10. The positional relation of the torque mechanism 80 at this time is brought by the urging force of the spring 182 to the position where the main body side rib 132 is engaged with the elastic torque piece 194, i.e., to the position under the condition where the leg 194d of the elastic torque piece 194 is supported by the supporting edge 132e of the main body rib 132.

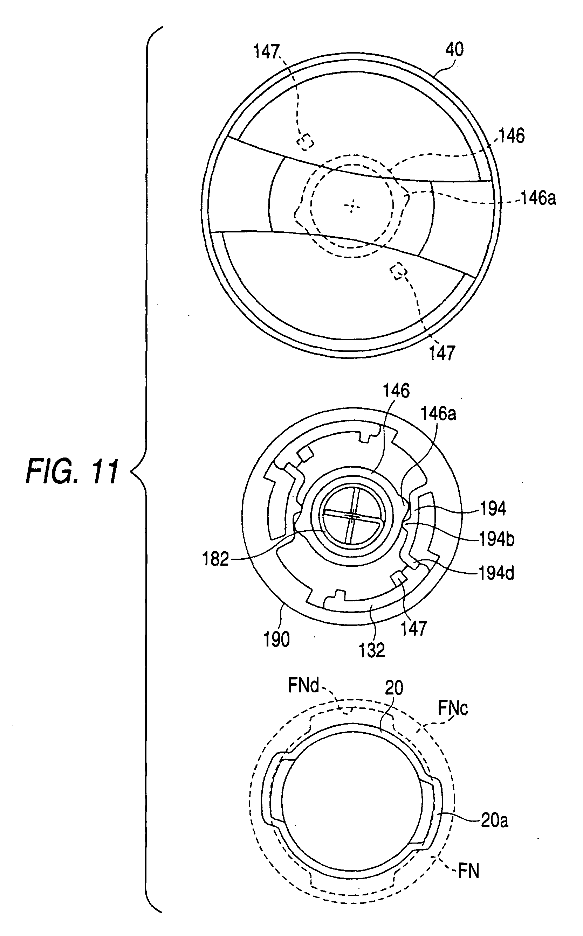

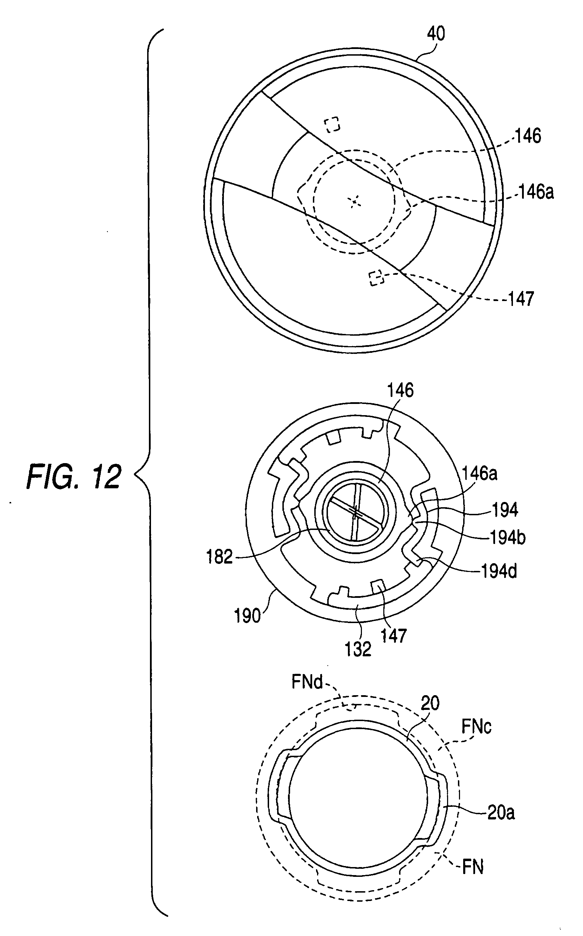

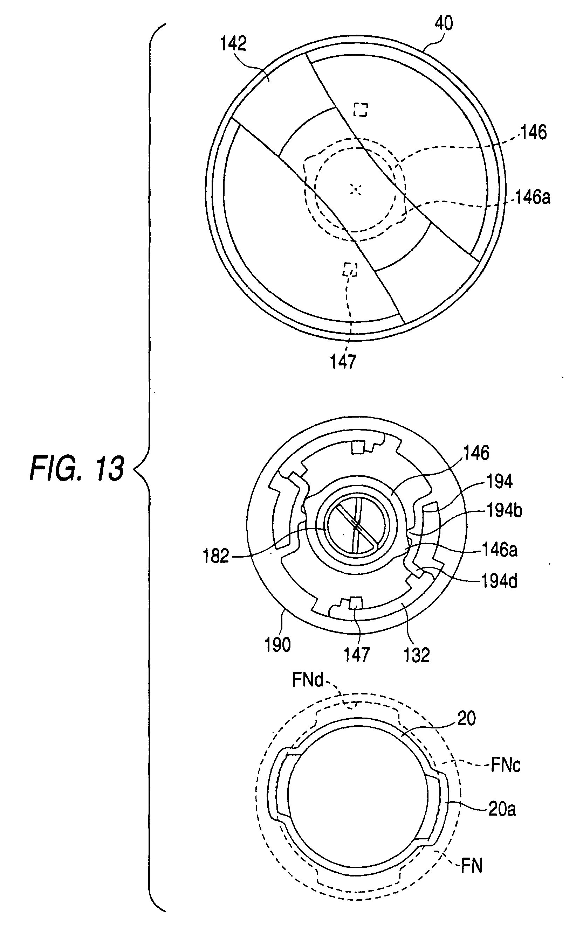

If giving the rotating force in the clockwise direction to the cover 40 from the above mentioned state, the torque mechanism 80 makes a series of operations as shown from Figs. 10 to 14. That is, the clockwise rotating force given to the cover 40 is transmitted to the torque plate 190 via the engagement between the cover side retaining portion 146a of the cover 40 and the plate side retaining part 194b of the torque plate 190, so as to rotate the torque plate 190 in the same direction. Accompanied with the rotation of the torque plate 190, the main body side rib 132 is pushed by the leg 194d of the elastic piece 194. Then, the cover 40, the torque plate 190, and the casing main body 20 are rotated about 100° together to close the pouring inlet FNb, and the casing side retaining part 20a is in engagement with the opening side retaining part FNc (State in Fig. 11). When reaction force generated in the cover 40 by the engaging force exceeds a predetermined rotation torque, the cover side retaining part 146a bends the elastic torque piece 194 (State in Fig. 12), and further going beyond the plate side retaining part 194b, a first attaching-detaching condition is thus made (State in Fig. 13). In this attaching-detaching condition, the cover 40 rotates about 30°, and when passing this condition, a user can confirm the moderation. Namely, as the elastic torque piece 194 is supported by the supporting edge 132e of the main body side rib 132 at the leg 194d, it is difficult to bend, and the rotation torque for the cover side retaining part 146a to go over the plate side retaining part 194b is large, and the moderation can be ascertained.

When the cover side retaining part 146a goes over the plate side retaining part 194b, in short, when the cover 40 rotates relatively with the casing main body 20, the spring 182 expanding therebetween is twisted by about 30° to store the urging force (refer to Fig. 13).

The urging force accumulated in the spring 182 rotates the cover 40 counterclockwise by releasing the operator' s hands from the operating portion 42 of the cover 40. In other words, the urging force of the spring 182 rotates counterclockwise the cover 40 and the torque plate 190 via the engagement between the cover side retaining portion 146a and the plate side retaining part 194b. At this time, as the casing main body 20 is secured to the filler neck FN, the main body side rib 132 integral with the casing main body 20 is also secured. Under this state, if the torque plate 190 rotates counterclockwise, the leg 194d of the elastic torque piece 194 separates from the supporting edge 132e of the main body rib 132, and the elastic torque piece 194 is of cantilever (State in Fig. 14). Further the cover 40 is secured in a state where the pressing edge 193b of the rib guide part 193 is brought into abutment with the main body side rib 132. Under this state, the fuel cap 10 closes the pouring inlet FNb (refer to Fig. 5). By adjusting a position on which the pressing edge 193b of the rib guide part 193 is formed, the securing angle of the operating part 42 may be predetermined. Therefore the cover 40 and the casing main body 20 are retained having a predetermined relative angle a for a lost motion between the cover 40 and the casing main body 20 as shown in Fig. 14, when the fuel cap 10 closes the pouring inlet FNb. By such a structure, loosing of the cap by an large external force at the crush of the automobile and the like is effectively prevented.

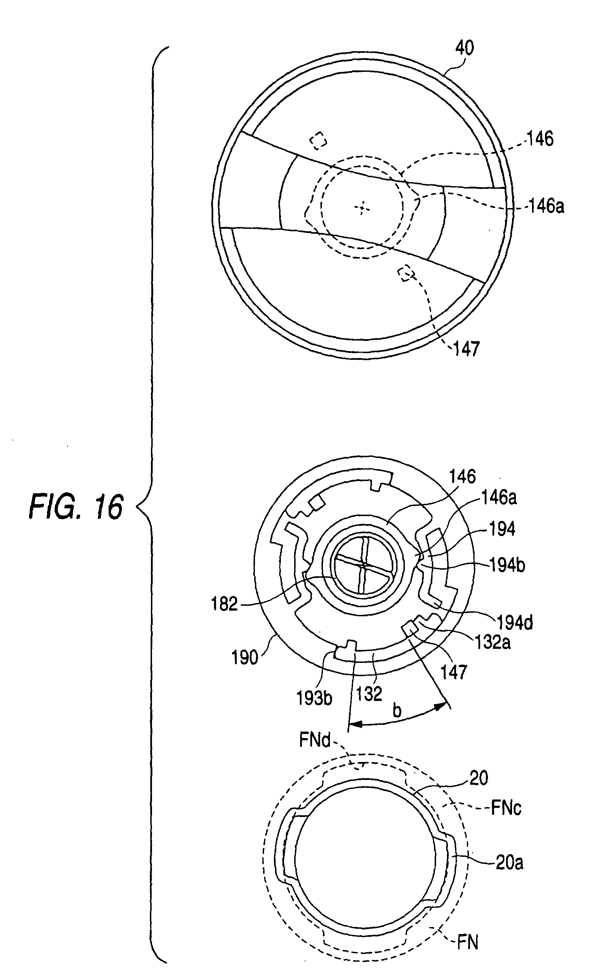

Incidentally, if a setting load of the spring 182 for urging the cover 40 in counterclockwise direction is provided sufficiently large, the urging force accumulated in the spring 182 further rotates the cover 40, and the cover side retaining portion 146a goes through the plate side retaining part 194b, when the operator's hand is released from the operating portion 42 of the cover 40. Then, the cover 40 is rotated separated from the torque plate 190, and secured in a state where the cover side trigger projection 147 is brought in to abutment with the retaining projection 132a (State in Fig. 16).

In other words, the cover 40 recovers to an initial position with respect to the casing main body 20. Under this state, the fuel cap 10 closes the pouring inlet FNb (refer to Fig. 5) without forming angle for a lost motion.

The total rotation angle of the cover 40 after the operator' s hand is released from the operation portion 42 makes an angler b shown in Fig. 16. In this case, if the position of the neck side inserting notch FNd is provided by offsetting 20° to 30° in the clockwise direction, the operating portion 42 can be set at the desired position.

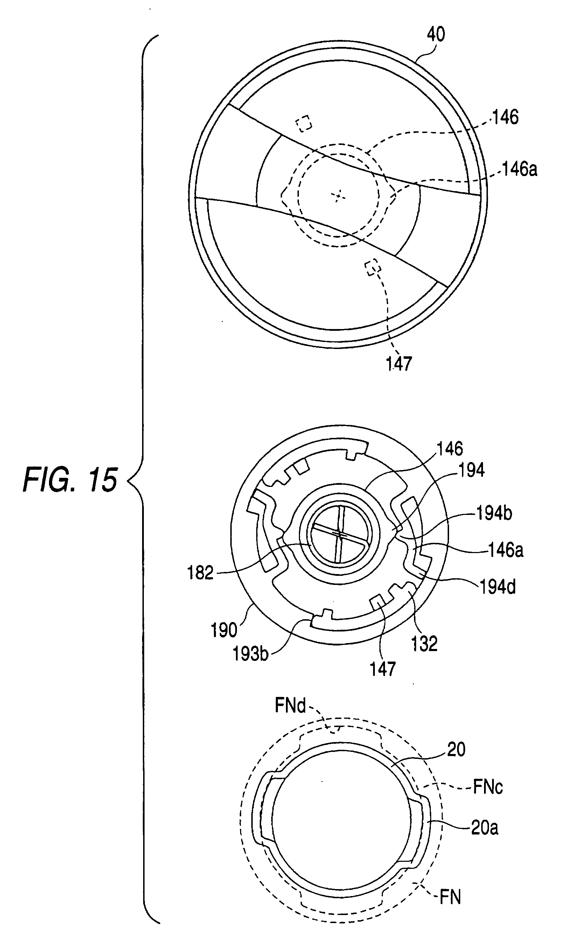

On the other hand, for opening the fuel cap 10, the operating portion 42 of the cover 40 is held by the fingers to give to the operating portion 42 the counterclockwise rotation from the state shown in Fig. 14. As the elastic torque piece 194 is of cantilever, the cover side retaining part 146a easily goes beyond the plate side retaining part 194b (State in Fig. 15).

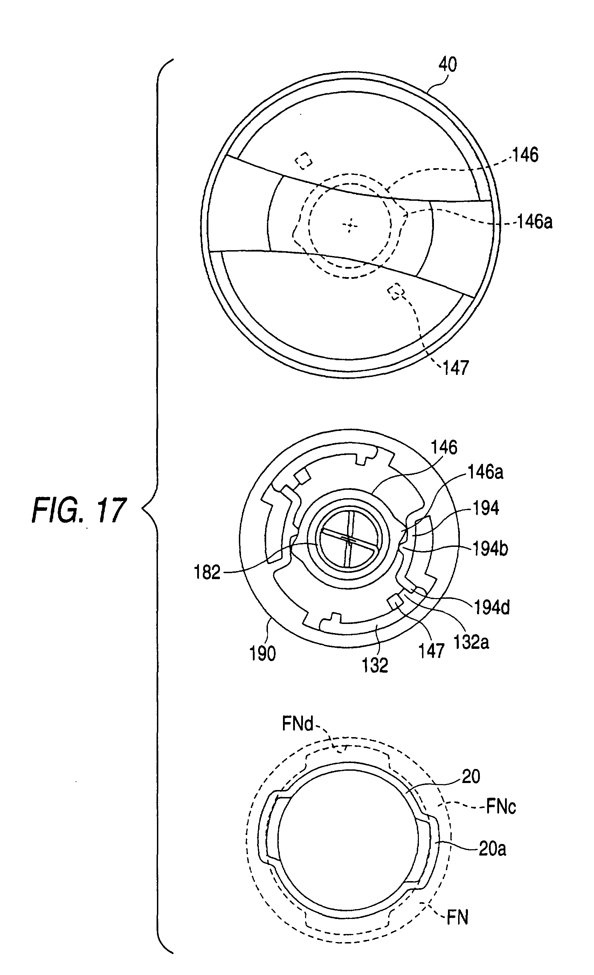

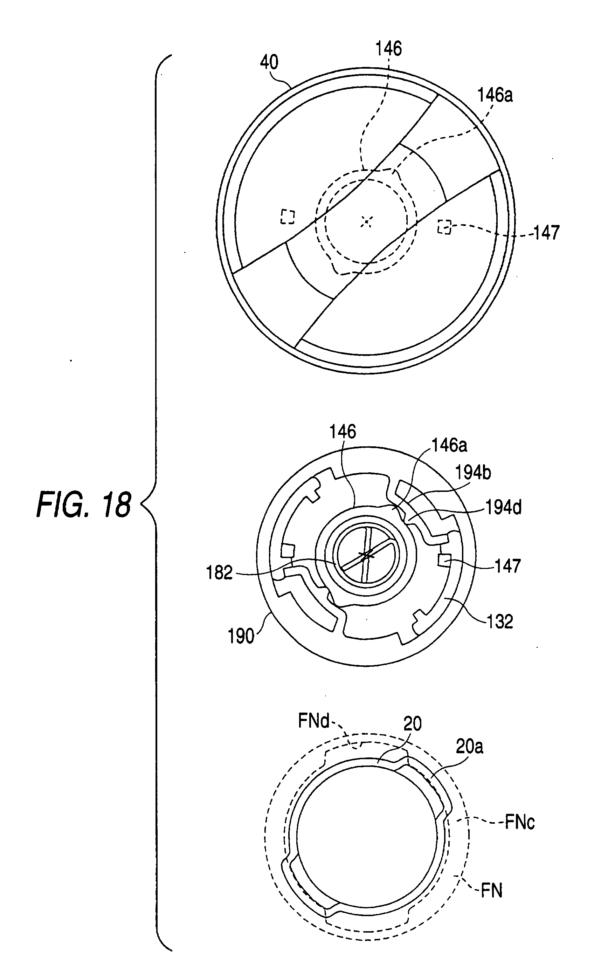

When the cover side trigger projection 147 contacts the retaining projection 132a to rotate the main body side rib 132 and support the leg 194d of the elastic torque piece 194 by means of the retaining projection 132a, the cover 40, the torque plate 190 and the casing main body 20 are, under this state, ready for rotating counterclockwise together (State in Fig. 17). If rotating the cover 40 further counterclockwise and returning to the state of Fig. 10 via the state of Fig. 18, the casing side retaining part 20a gets out from the opening side retaining part FNc of the filler neck FN, and the fuel cap 10 is going to slip out from the filler neck FN. Then, the positional relation between the operating portion 42 of the cover 40 and the casing side retaining part 20a of the casing main body 20 recovers to an initial state.

In the course of the closing operation of the fuel cap 10, the moderation can be ascertained when the cover side retaining part 146a of the cover 40 goes beyond the plate side retaining part 194b of the torque plate 190, and as it is seen that the fuel cap 10 is tightened at a predetermined torque, the tightening at the constant torque is available, irrespective of elasticity of the gasket.

Besides, the fuel cap 10 is sufficiently operated at the small rotating angle as about 140° through the engagement between the casing side retaining part 20a and the opening side retaining part FNc, and rotating operations of several times are not requisite, and the attaching operation is simple.

Moreover, since the cover 40 and the casing main body 20 can be retained having a relative angle with each other by the torque mechanism 80, the securing angle of the operating part 42 can be set at a desired angle irrespective of the engagement state between the pouring inlet FN and the casing main body 20.

The invention should not be limited to the above mentioned embodiments, and so far as not getting out the subject matter, various modifications are practicable, and for example, the following modifications are available.

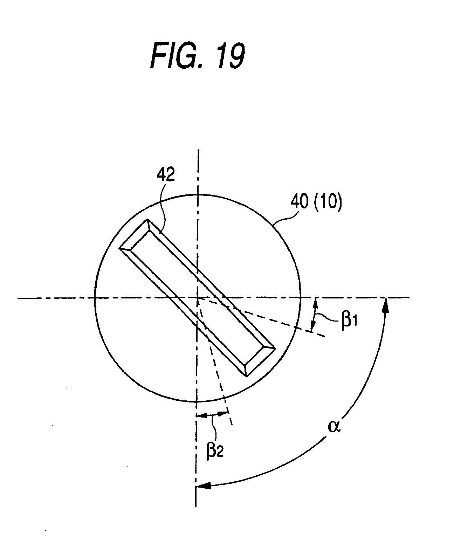

(1) In Fig. 19, the operating portion 42 receives the external force at the rear part of the automobile, and for rotating the fuel cap 10 in the closing direction, it is sufficient that the end of the operating portion positions within the range of 90° of the angle α, and preferably β1 is 5° or more, β2 is 40° or more, specially preferably, β1 is 10° or more, and β2 is 45° or more.
(2) For bringing the fuel cap to the closing position by rotating 180°or less, other than the structures explained with Figs. 9 to 18, various structures may be adopted without limit. For example, if determining a setting load of the spring 182 concerned with the above mentioned practices, such a structure may be enough which returns from the state of Fig. 14 to the state of Fig. 16, when the closed fuel cap is released. Thereby, click-feeling when opening the fuel cap can be removed, and the operation can be heightened. In this case, if sliding the position of the neck side inserting notch FNd 20° to 30° in the clockwise direction, the operating portion 42 can be set at the desired position.

## Claims

1. A fuel cap device for an automobile body, comprising:
an inlet (FNb) connected to a fuel tank,
a substantially cylindrical closer (10) for closing said inlet (FNb),
said closer (10) including a cover portion (40) on which an operation portion (42) is formed, a closer main body (20) for closing said inlet, and a torque mechanism (80) for connecting said cover (40) and said closer main body (20) so as to rotate relatively therebetween,
wherein said operation portion (42) is turned from a state of inserting said closer (10) to said inlet, to thereby bring said closer to an engaged position with said inlet, **characterized in that**
said cover portion (40) and said closer main body (20) are retained having a predetermined relative angle with each other after said closer (10) closes said inlet, the angle being determined such that
said operating portion (42) transmits to said closer (10) a torque turning in the closing direction when an external force exerting from the rear part of the automobile to the front part is received at an outer peripheral edge of said operating portion situated in a rearmost part of the automobile.

2. A fuel cap device according to claim 1,
wherein said operating portion (42) comprises a projection passing through a center of the upper part of said closer and bridging in a radius direction, and
the longitudinal direction of said operating portion is set substantially vertical when said closer is inserted into said inlet, and turned in an angle more than 90° and less than 180° so that the closer is in the engaged state with said inlet.

3. A fuel cap device according to claim 1 or 2, **characterized in that**
said torque mechanism (80) includes
a cover side retaining part (146a) provided in said cover portion (40),
a plate side retaining part (194b) provided in a torque plate (190), retaining with said cover side retaining part (146a),
a guiding part (193) provided in said torque plate (190), accommodating a main body side retaining part (132),
said main body side retaining part (132) provided on said closer main body (20) and transmitting to said closer main body (20) a torque subjected to said operating portion (42),
wherein said cover side retaining part (146a) and said plate side retaining part (194b) are provided so as to have
a retained state where said cover side retaining part (146a) are retained with said plate side retaining part (194b) supported by said main body side retaining part (132) when a torque lower than a first predetermined torque is subjected in said operating portion (42) in the closing direction of said closer,
a first switching state where said cover side retaining part (146a) moves beyond said plate side retaining part (194b) supported by said main body side retaining part (132), when the first predetermined or higher torque is subjected to said operating portion in the closing direction of said closer, and
a second switching state where said cover side retaining part (146a) moves beyond the plate side retaining part (194b) released from said main body side retaining part (132), when a second predetermined torque or higher is subjected to said operating portion in the opening direction of said closer.

4. A fuel cap device according to claim 3, **characterized in that**
said first predetermined torque is higher than said second predetermined torque.

5. A fuel cap device according to claim 3 or 4, **characterized in that**
said torque mechanism (80) further including means (182) for urging said cover portion (40) and said closer main body (20) against a relative rotation therebetween.

6. A fuel cap device according to claim 5, **characterized in that**
said urging means (182) provides a torque less than said second predetermined torque in the opening direction of said closer.

7. A fuel cap device according to claim 5, **characterized in that**
said urging means (182) provides said second predetermined torque or higher in the opening direction of said closer, so that said cover portion (40) returns to the initial relative position with respect to said closer main body (20) after said closer closes the inlet.

8. An automobile body comprising a fuel cap device according to anyone of the preceding claims.

## Patentansprüche

1. Verschlussdeckel für Kraftstoffbehälter für einen Kraftfahrzeugkörper, enthaltend:
einen Einlass (FNb), der mit einem Kraftstoffbehälter verbunden ist,
ein im Wesentlichen zylindrisches Schließelement (10) zum Schließen des Einlasses (FNb),
wobei das Schließelement (10) einen Abdeckbereich (40), auf dem ein Betätigungsbereich (42) ausgebildet ist, einen Hauptkörper (20) des Schließelements zum Schließen des Einlasses, und einen Drehmomentmechanismus (80) zum Verbinden der Abdeckung (40) und des Hauptkörpers (20) des Schließelements derart enthält , dass sie sich relativ zueinander drehen,
wobei der Betätigungsbereich (42) aus einem Zustand, in dem das Schließelement (10) in den Einlass eingesetzt wird, gedreht wird, um das Schließelement in eine Position in Eingriff mit dem Einlass zu bringen,
**dadurch gekennzeichnet, dass**
der Abdeckbereich (40) und der Hauptkörper (20) des Schließelements gehalten werden, wobei sie einen vorgegebenen Relativwinkel zueinander aufweisen, nachdem das Schließelement (10) den Einlass schließt, wobei der Winkel derart bestimmt ist, dass der Betätigungsbereich (42) an das Schließelement (10) ein Drehmoment überträgt, das in die Schließrichtung dreht, wenn eine externe Kraft, die von dem hinteren Bereich zum vorderen Bereich des Kraftfahrzeugs ausgeübt wird, an einem äußeren Umfangsrand des Betätigungsbereichs aufgenommen wird, der in einem ganz hinten liegenden Bereich des Fahrzeugs positioniert ist.

2. Verschlussdeckel für einen Kraftstoffbehälter nach Anspruch 1,
wobei der Betätigungsbereich (42) einen Vorsprung enthält, der durch ein Zentrum des oberen Teils des Schließelements läuft und eine Überbrückung in einer Radialrichtung darstellt, und
die Längsrichtung des Betätigungsbereichs im Wesentlichen vertikal festgelegt ist, wenn das Schließelement in den Einlass eingesetzt wird, und in einen Winkel von mehr als 90° und weniger als 180° gedreht wird, so dass das Schließelement in dem Zustand in Eingriff mit dem Einlass ist.

3. Verschlussdeckel für einen Kraftstoffbehälter nach Anspruch 1 oder 2, **dadurch gekennzeichnet, dass**
der Drehmomentmechanismus (80) enthält:
einen Halteteil (146a) der Abdeckungsseite, der in dem Abdeckbereich (40) vorgesehen ist,
einen Halteteil (194b) der Plattenseite, der in einer Drehmomentplatte (190) vorgesehen ist, der mit dem Halteteil (146a) der Abdeckungsseite hält,
einen Führungsteil (193), der in der Drehmomentplatte (190) vorgesehen ist, der einen Halteteil (132) der Hauptkörperseite aufnimmt,
wobei der Halteteil (132) der Hauptkörperseite auf dem Hauptkörper (20) des Schließelements vorgesehen ist und an den Hauptkörper (20) des Schließelements ein Drehmoment überträgt, dem der Betätigungsbereich (42) unterworfen ist,
wobei der Halteteil (146a) der Abdeckungsseite und der Halteteil (194b) der Plattenseite derart vorgesehen sind, dass sie aufweisen:
einen gehaltenen Zustand, in dem der Halteteil (164a) der Abdeckungsseite mit dem Halteteil (194b) der Plattenseite gehalten ist, der durch den Halteteil (132) der Hauptkörperseite gestützt wird, wenn ein Drehmoment kleiner als ein vorgegebenes erstes Drehmoment auf den Betätigungsbereich (42) in der Schließrichtung des Schließelements aufgebracht wird,
einen ersten Schaltzustand, in dem der Halteteil (146a) der Abdeckungsseite sich über den Halteteil (194b) der Plattenseite hinaus bewegt, der durch den Halteteil (132) der Hauptkörperseite gestützt wird, wenn das erste vorgegebene Drehmoment oder ein höheres Drehmoment auf den Betätigungsbereich in der Schließrichtung des Schließelements ausgeübt wird, und
einen zweiten Schaltzustand, in dem der Halteteil (146a) der Abdeckungsseite sich über den Halteteil (194b) der Plattenseite hinaus bewegt, der von dem Halteteil (132) der Hauptkörperseite gelöst ist, wenn ein zweites vorgegebenes Drehmoment oder höher auf den Betätigungsbereich in der Öffnungsrichtung des Schließelements aufgebracht wird.

4. Verschlussdeckel für einen Kraftstoffbehälter nach Anspruch 3, **dadurch gekennzeichnet, dass**
das erste vorgegebene Drehmoment höher als das zweite vorgegebene Drehmoment ist.

5. Verschlussdeckel für einen Kraftstoffbehälter nach Anspruch 3 oder 4, **dadurch gekennzeichnet, dass**
der Drehmomentmechanismus (80) weiter Mittel (182) zum Drücken des Abdeckbereichs (40) und des Hauptkörpers (20) des Schließelements gegen eine Relativrotation zwischen diesen Bauteilen enthält.

6. Verschlussdeckel für einen Kraftstoffbehälter nach Anspruch 5, **dadurch gekennzeichnet, dass**
das Mittel (182) zum Drücken ein Drehmoment kleiner als das zweite vorgegebene Drehmoment in der Öffnungsrichtung des Schließelements vorsieht.

7. Verschlussdeckel für einen Kraftstoffbehälter nach Anspruch 5, **dadurch gekennzeichnet, dass**
das Mittel (182) zum Drücken das zweite vorgegebene Drehmoment oder höher in der Öffnungsrichtung des Schließelements vorsieht, so dass der Abdeckbereich (40) sich in die Ausgangsrelativposition im Bezug auf den Hauptkörper (20) des Schließelements zurückbewegt, nachdem das Schließelement den Einlass schließt.

8. Kraftfahrzeugkörper enthaltend einen Verschlussdeckel für einen Kraftstoffbehälter nach einem der vorhergehenden Ansprüche.

## Revendications

1. Bouchon de réservoir de carburant pour une carrosserie d'automobile, comprenant :
une entrée (FNb) connectée à un réservoir de carburant,
un bouchon essentiellement cylindrique (10) pour fermer ladite entrée (FNb),
ledit bouchon (10) comprenant une partie de couvercle (40) sur laquelle une partie d'actionnement (42) est formée, un corps principal de bouchon (20) pour fermer ladite entrée, et un mécanisme de couple (80) pour connecter ledit couvercle (40) et ledit corps principal de bouchon (20) d'une manière telle qu'ils effectuent une rotation relative l'un par rapport à l'autre,
dans lequel ladite partie d'actionnement (42) est tournée à partir d'un état d'insertion dudit bouchon (10) dans ladite entrée, afin d'amener ledit bouchon dans une position engagée avec ladite entrée,
**caractérisé en ce que** :
ladite partie de couvercle (40) et ledit corps principal de bouchon (20) sont retenus sous un angle relatif prédéterminé l'un par rapport à l'autre une fois que ledit bouchon (10) a fermé ladite entrée,
l'angle étant déterminé de telle sorte que :
ladite partie d'actionnement (42) transmet audit bouchon (10) un couple en tournant dans la direction de fermeture lorsqu'une force externe exercée à partir de la partie arrière de l'automobile vers la partie avant est reçue à un bord périphérique extérieur de ladite partie d'actionnement située dans une partie la plus en arrière de l'automobile.

2. Bouchon de réservoir de carburant selon la revendication 1,
dans lequel ladite partie d'actionnement (42) comprend une saillie passant par un centre de la partie supérieure dudit bouchon et s'étendant dans une direction radiale, et
la direction longitudinale de ladite partie d'actionnement est essentiellement verticale lorsque ledit bouchon est inséré dans ladite entrée, et tournée d'un angle supérieur à 90° et inférieur à 180° de telle sorte que le bouchon se trouve dans la position engagée avec ladite entrée.

3. Bouchon de réservoir de carburant selon la revendication 1 ou 2, **caractérisé en ce que** :
ledit mécanisme de couple (80) comprend :
une partie de retenue du côté du couvercle (146a) disposée dans ladite partie de couvercle (40),
une partie de retenue du côté de la plaque (194b) disposée dans une plaque de couple (190), exerçant son action de retenue avec ladite partie de retenue du côté du couvercle (146a),
une partie de guidage (193) disposée dans ladite plaque de couple (190), accueillant une partie de retenue du côté du corps principal (132),
ladite partie de retenue du côté du corps principal (132) étant disposée sur ledit corps principal de bouchon (20) et transmettant audit corps principal de bouchon (20) un couple appliqué à ladite partie d'actionnement (42),
dans lequel ladite partie de retenue du côté du couvercle (146a) et ladite partie de retenue du côté de la plaque (194b) étant disposées de manière à se trouver :
dans un état retenu lorsque ladite partie de retenue du côté du couvercle (146a) est retenue avec ladite partie de retenue du côté de la plaque (194b) supportée par ladite partie de retenue du côté du corps principal (132) lorsqu'un couple inférieur à un premier couple prédéterminé est appliqué à ladite partie d'actionnement (42) dans la direction de fermeture dudit bouchon,
dans un premier état de commutation lorsque ladite partie de retenue du côté du couvercle (146a) se déplace au-delà de ladite partie de retenue du côté de la plaque (194b) supportée par ladite partie de retenue du côté du corps principal (132), lorsque le premier couple prédéterminé, ou un couple supérieur à celui-ci, est appliqué à ladite partie d'actionnement dans la direction de fermeture dudit bouchon, et
dans un deuxième état de commutation lorsque ladite partie de retenue du côté du couvercle (146a) se déplace au-delà de ladite partie de retenue du côté de la plaque (194b) libérée de ladite partie de retenue du côté du corps principal (132), lorsqu'un deuxième couple prédéterminé, ou un couple supérieur à celui-ci, est appliqué à ladite partie d'actionnement dans la direction d'ouverture dudit bouchon.

4. Bouchon de réservoir de carburant selon la revendication 3, **caractérisé en ce que** :
ledit premier couple prédéterminé est supérieur audit deuxième couple prédéterminé.

5. Bouchon de réservoir de carburant selon la revendication 3 ou 4, **caractérisé en ce que** :
ledit mécanisme de couple (80) comprend en outre un moyen (182) pour pousser ladite partie de couvercle (40) et ledit corps principal de bouchon (20) contre une rotation relative l'un par rapport à l'autre.

6. Bouchon de réservoir de carburant selon la revendication 5, **caractérisé en ce que** :
ledit moyen de poussée (182) fournit un couple inférieur audit deuxième couple prédéterminé dans la direction d'ouverture dudit bouchon.

7. Bouchon de réservoir de carburant selon la revendication 5, **caractérisé en ce que** :
ledit moyen de poussée (182) fournit ledit deuxième couple prédéterminé, ou un couple supérieur à celui-ci, dans la direction d'ouverture dudit bouchon, de telle sorte que ladite partie de couvercle (40) retourne dans la position relative initiale par rapport audit corps principal de bouchon (20) une fois que ledit bouchon a fermé l'entrée.

8. Carrosserie d'automobile comprenant un bouchon de réservoir de carburant selon l'une quelconque des revendications précédentes.
